# NEUE EUROPÄISCHE PATENTSCHRIFT

(11) **EP 2 890 625 B2**
(45) Veröffentlichungstag und Bekanntmachung des Hinweises auf die Entscheidung über den Einspruch: **25.09.2019**
(45) Hinweis auf die Patenterteilung: 12.10.2016
(21) Anmeldenummer: 12759043.8
(22) Anmeldetag: 28.08.2012
(51) Int. Cl.: B66C 7/00, E01B 25/28

(54) **SCHIENENSYSTEM**
RAIL SYSTEM
SYSTÈME DE RAIL

(43) Veröffentlichungstag der Anmeldung: 08.07.2015
(73) Patentinhaber: Strothmann Machines & Handling GmbH, 33758 Schloß Holte-Stukenbrock (DE)
(72) Erfinder: MÜNTER, Christoph, 32602 Vlotho (DE)
(74) Vertreter: Ter Meer Steinmeister & Partner
(86) Internationale Anmeldenummer: PCT/EP2012/066669
(87) Internationale Veröffentlichungsnummer: WO 2014/032699

(56) Entgegenhaltungen:
- EP-A1- 0 222 277
- EP-A2- 0 607 954
- WO-A1-99/63160
- DE-A1- 3 150 571
- DE-A1- 10 328 336
- DE-C1- 4 318 383
- DE-U1-202011 002 642

## Beschreibung

Die vorliegende Erfindung betrifft ein Schienensystem, gemäß dem Oberbegriff des Anspruchs 1.

Schienensysteme sind beispielsweise aus WO 99/63160 A1, DE 103 28 336 A1, EP 0 222 277 B1 und DE 20 2010 000 866 U1 bekannt. Schienensysteme der hier vorliegenden Art werden in der Industrie zum spurgenauen Bewegen großer Maschinen oder Maschinenteile wie etwa Krananlagen, Drucktrommeln von Rotationsdruckmaschinen oder dergleichen eingesetzt, insbesondere aber auch zum Transport von großen und schweren Montageteilen von einer Fertigungsstation zur nächsten. Beispielsweise werden im Automobilbau sogenannte Schubskidanlagen eingesetzt, bei denen es sich um Plattformen handelt, die auf solchen Schienensystemen laufen. Ein weiteres Beispiel stellen die Gondeln von Windkraftanlagen dar, die mehrere Tonnen wiegen, mit Hilfe solcher Montageplattformen jedoch relativ leicht zu bewegen sind.

Ein solches Schienensystem ist beispielsweise aus dem deutschen Patent DE 43 18 383 C1 der Anmelderin bekannt. Es umfasst ein Trägerprofil, das einen oben offenen Querschnitt aufweist und in den meisten Fällen in den Untergrund eingelassen wird. In das Trägerprofil wird eine Rundschiene eingelegt, die große Lasten aufnehmen kann. Die Schiene wird beidseitig von Klemmprofilen festgelegt, die in seitlichen Zwischenräumen zwischen der Schiene und den Seitenwänden des Trägerprofils einliegen und die Schiene teilweise übergreifen. Auf der Oberseite der Schiene verbleibt ein freier Winkelbereich, auf welchem Laufrollen eines Wagens rollen können.

Ein wesentlicher Vorteil dieses Systems besteht darin, dass das gesamte Schienenführungssystem bündig in den Boden eingelassen werden kann und keine Stolperkanten verbleiben. Die Schiene kann problemlos von Fahrzeugen mit kleinen oder harten Rädern überfahren werden. Zudem sind keine steil aufragenden Kanten oder tiefe Ritzen vorhanden, in denen sich Schmutz ansammeln kann.

Die Rundschiene kann einfach ausgewechselt werden, indem zunächst die Klemmprofile zu beiden Seiten der Schiene gelöst und entfernt werden, so dass die Schiene frei liegt. Bei dem Schienensystem, das aus DE 43 18 383 C1 bekannt ist, sind die Klemmprofile in den Trägerprofilen verrastet und daher aufwändig zu lösen. Probleme bereitet ferner das Aufbringen einer definierten Klemmkraft auf die Schiene, was durch die Rastverbindung praktisch nicht zu erreichen ist. Wenngleich die Schiene Lasten, die von oben auf die Lauffläche wirken, gut in das Trägerprofil einleitet, bietet das bisherige Schienensystem nicht genügend Widerstand gegen Kräfte zum Anheben der Schiene aus ihrer Verankerung, die durch das Abrollen des Rades entstehen.

Es ist daher die Aufgabe der vorliegenden Erfindung, ein Schienensystem der eingangs genannten Art zu schaffen, dessen Klemmprofile sich relativ leicht lösen und auch erneut wieder einsetzen lassen, gleichzeitig jedoch eine verbesserte Klemmwirkung zum Halten der Schiene in ihrer Lage im Trägerprofil bieten.

Diese Aufgabe wird erfindungsgemäß durch ein Schienensystem mit den Merkmalen des Anspruchs 1 gelöst.

Das erfindungsgemäße Schienensystem zeichnet sich dadurch aus, dass sich der offene Querschnitt des Trägerprofils zumindest in einem oberen Teil nach unten hin seitlich erweitert und einen hinterschnittenen Querschnittsbereich bildet. Die Seitenwandabschnitte des Trägerprofils, die diesen Querschnittsbereich seitlich begrenzen, sind nach innen geneigt oder konkav gewölbt. Das Klemmprofil hingegen umfasst einen Querschnittsteil, der sich nach unten hin keilförmig verjüngt und in einen entsprechend geformten Teil des Zwischenraums eingepasst ist, der innerhalb dieses hinterschnittenen Querschnittsbereichs liegt. Dieser sich verjüngende Teil des Klemmprofils wird zur Schiene hin durch eine innere Kontaktfläche und zur Seitenwand hin durch eine äußere Kontaktfläche begrenzt, die an dem entsprechenden oberen Seitenwandabschnitt anliegt.

Das seitlich an der Schiene anliegende Klemmprofil kann somit schräg oder bogenförmig von oben in den Zwischenraum hinein gleiten, lässt sich jedoch aufgrund der Hinterschneidung des Öffnungsquerschnitts des Trägerprofils nicht senkrecht zusammen mit der Schiene aus dem Trägerprofil herausheben. Eine entsprechende Kraft auf die Schiene wird über das Klemmprofil flächig über eine äußere Kontaktfläche in den geneigten oder konkav gewölbten Seitenwandabschnitt eingeleitet. Zu diesem Zweck ist die äußere Kontaktfläche entsprechend diesem Seitenwandabschnitt ausgeformt, weist also eine entsprechende Neigung oder Wölbung auf. Eine genaue Passung des keilförmigen Teils des Klemmprofils in den Zwischenraum begünstigt die Einleitung von Aushubkräften, die auf die Schiene wirken, in das Trägerprofil.

Der Begriff "keilförmig" soll hier und in der folgenden Beschreibung eine Form bezeichnen, deren Breite in einer Richtung abnimmt und deren begrenzende Flächen aufeinander zu laufen. Diese Grenzflächen können in diesem Sinne wahlweise gewölbt oder plan sein. Die Grenzflächen müssen sich nicht notwendigerweise am Ende des Keils treffen.

Die Hinterschneidung des freien Querschnittsbereichs des Trägerprofils bewirkt gemeinsam mit dem Sitz des keilförmigen Teils des Klemmprofils in diesem Teil des Zwischenraums eine selbsthemmende Klemmwirkung, die ein Herausheben der Schiene verhindert. Eine Demontage ist nur möglich, wenn zunächst das Klemmprofil schräg oder bogenförmig aus dem Zwischenraum angehoben und entnommen wird, und anschließend die frei gelegte Schiene zugänglich ist.

Wenngleich vorstehend lediglich von einem Klemmprofil gesprochen wurde, das in einem seitlichen Zwischenraum neben der Schiene eingesetzt wird, versteht es sich, dass entsprechend einer verbreiteten Ausführungsform solcher Schienensysteme die Schiene beidseitig von zwei gleichartig ausgebildeten Klemmprofilen gehalten werden kann, so wie es auch in der DE 43 18 383 B4 gezeigt ist.

Aufgrund der Einpassung des oberen Teils des Klemmprofils in den Zwischenraum ist es möglich, mittels Schrauben oder Nieten eine definierte Klemmkraft auf die Schiene zu übertragen. Die Schrauben werden zu diesem Zweck von oben durch das Klemmprofil geführt und in das Trägerprofil eingedreht, so dass das Klemmprofil zusammen mit der Schiene mit dem Trägerprofil verspannt wird.

Vorzugsweise bildet der sich keilförmig verjüngende Teil einen oberen Querschnittsteil des Klemmprofils, und das Klemmprofil umfasst ferner einen unteren Teil, der eine untere innere Kontaktfläche aufweist, die auf einer Höhe unterhalb der inneren Kontaktfläche des oberen Teils seitlich an der Schiene anliegt. Die zusätzliche innere Kontaktfläche am unteren Teil des Klemmprofils sorgt dafür, dass sich das Klemmprofil beim Anheben der Schiene nicht aus dem Zwischenraum herausdrehen kann.

Gemäß einer bevorzugten Ausführungsform der vorliegenden Erfindung sind sowohl die obere innere Kontaktfläche als auch die äußere Kontaktfläche des sich verjüngenden Teils des Klemmprofils im Querschnitt bogenförmig gekrümmt.

Vorzugsweise sind die obere innere Kontaktfläche und die äußere Kontaktfläche kreisbogenförmig gekrümmt.

Weiter vorzugsweise weisen die obere innere Kontaktfläche und die äußere Kontaktfläche des sich keilförmig verjüngenden Teils des Klemmprofils unterschiedliche Krümmungsradien auf.

Weiter vorzugsweise ist der Krümmungsradius der äußeren Kontaktfläche größer als derjenige der oberen inneren Kontaktfläche.

Erfindungsgemäß ist die Schiene als Rundschiene mit kreisrundem Querschnitt ausgebildet. Mit ihrer Unterseite kann die Rundschiene in einer ebenfalls kreisbogenförmig gewölbten Mulde im Trägerprofil einliegen. An ihrer Oberseite verbleibt ein freier kreisbogenförmig konvexer Winkelbereich als Lauffläche für eine Rolle.

Gemäß einer weiteren bevorzugten Ausführungsform der vorliegenden Erfindung folgt der Querschnitt der äußeren Kontaktfläche des Klemmprofils etwa dem Bogen eines Kreises, dessen Mittelpunkt auf einer Höhe oberhalb des Mittelpunkts des Querschnitts der Rundschiene liegt. Damit werden insbesondere die innere und die äußere Kontaktfläche des Klemmprofils durch Bogenabschnitte von Kreisen definiert, die exzentrisch zueinander liegen.

Vorzugsweise untergreift die untere innere Kontaktfläche des unteren Teils des Klemmprofils die Rundschiene seitlich.

Weiter vorzugsweise wird das Klemmprofil durch Schrauben oder Nieten im Trägerprofil verankert, die sich von oben durch das Klemmprofil hindurch in das Trägerprofil hinein erstrecken. Hierdurch lässt sich eine definierte Klemmkraft ausüben, wie bereits oben beschrieben. Insbesondere werden zu diesem Zweck die Schrauben mit einem definierten Drehmoment angezogen.

Bevorzugt liegt die Schiene mittig in einem spiegelsymmetrischen Trägerprofil ein und ist zwischen zwei identisch ausgebildeten Klemmprofilen festgelegt, die in den Zwischenräumen zu beiden Seiten der Schiene einliegen.

Gemäß einer weiteren bevorzugten Ausführungsform ist das erfindungsgemäße Schienensystem gekennzeichnet durch eine Schubsicherung, die zugleich als Verbindung zweier aneinander anschließender Trägerprofile dient und eine Stoßplatte umfasst, die senkrecht stehend zwischen den Enden der zu verbindenden Trägerprofile einliegt und auf ihrer Oberseite eine Aussparung aufweist, die im wesentlichen dem offenen Querschnitt des Trägerprofils entspricht, sowie Passfedern, die in der Erstreckungsrichtung der Schiene in Öffnungen in der Stoßplatte zu beiden Seiten der Aussparung eingesetzt sind und selbst seitliche äußere Aussparungen aufweisen, in welche die äußeren Öffnungsränder der Öffnungen eingepasst sind, so dass die Passfedern verliersicher in den Öffnungen einliegen, und seitliche Nuten in den Trägerprofilen, die in der Erstreckungsrichtung der Schiene verlaufen. Die Trägerprofile sind beidseitig derart zwischen die Passfedern gegen die Stoßplatte eingeschoben, dass die Innenseiten der Passfedern in den Nuten aufgenommen sind.

Durch die Passfedern werden die Trägerprofile, die von beiden Seiten auf die Stoßplatte stoßen, exakt aufeinander ausgerichtet, so dass die Nuten zur Aufnahme der Passfedern und infolgedessen die Trägerprofile insgesamt miteinander fluchten. Die Trägerprofile lassen sich somit nicht mehr seitlich, d.h. quer zur Erstreckungsrichtung der Schiene gegeneinander verschieben. Eine Längsverschiebung der Passfedern in den Nuten wird durch die verliersichere Anordnung in den Öffnungen verhindert. Zum Entfernen der Passfedern aus den Öffnungen müssen zunächst die Trägerprofile beidseitig von der Stoßplatte gezogen werden, so dass nachfolgend die Passfedern aus den Öffnungen gelöst werden können. Somit können die Passfedern nur bei einer vollständigen Demontage des Systems entfernt werden.

Gemäß einer bevorzugten Ausführungsform eines solchen Schienensystems weist die Schiene auf ihrer Unterseite eine quer verlaufende schlitzförmige Ausnehmung zur Aufnahme der Oberkante der Stoßplatte innerhalb der Aussparung auf. Damit wird auch eine Längsverschiebung der Schiene auf dem Trägerprofil verhindert.

Vorzugsweise kragen die seitlichen und unteren Ränder der Stoßplatte über das Trägerprofil aus. Hierdurch wird es möglich, die Ränder der Stoßplatte im Untergrund in der Umgebung des Trägerprofils zu verankern, beispielsweise durch ein Einschalen mit Beton.

Im folgenden wird ein bevorzugtes Ausführungsbeispiel der Erfindung anhand der Zeichnung näher erläutert.
- Fig. 1: ist ein Querschnitt durch eine bevorzugte Ausführungsform des erfindungsgemäßen Schienensystems;
- Fig. 2 und 3: sind weitere Querschnittsansichten der vorliegenden Ausführungsform des erfindungsgemäßen Schienensystems aus Fig. 1, zur Erläuterung des Montagevorgangs;
- Fig. 4: ist eine perspektivische Explosionsdarstellung der vorliegenden Ausführungsform des erfindungsgemäßen Schienensystems, die eine Schubsicherung in Form eines Verbindungssystems zum Anschluss zweier Trägerprofile zeigt;
- Fig. 5: ist ein Querschnitt durch die vorliegende Ausführungsform des erfindungsgemäßen Schienensystems einschließlich der Schubsicherung;
- Fig. 6: ist eine perspektivische Ansicht des vorliegenden Schienensystems einschließlich der Schubsicherung.

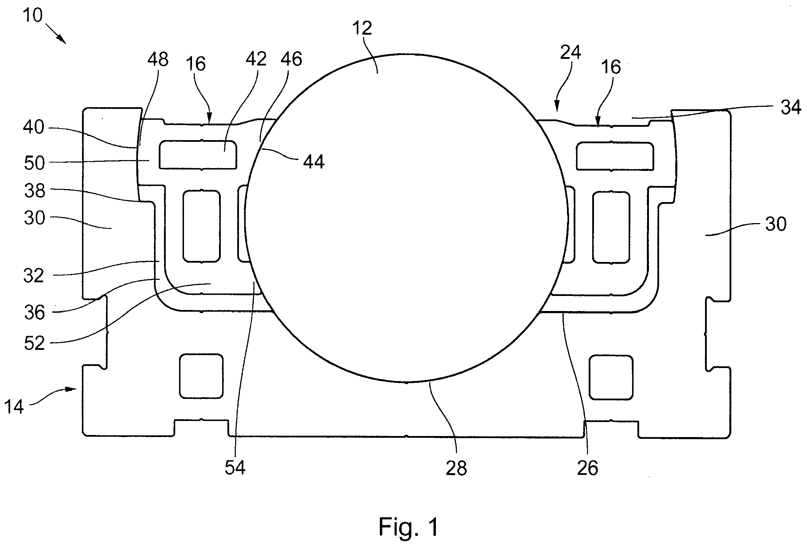

Das in Fig. 1 dargestellte erfindungsgemäße Schienensystem 10 umfasst eine Schiene 12, die als massive Rundschiene mit kreisrundem Querschnitt ausgebildet ist und in einem Trägerprofil 14 gelagert ist. Das Trägerprofil 14 wird meist bündig in den Untergrund eingelassen und ist darin verankert. Es weist einen nach oben offenen Querschnittsbereich bzw. Querschnitt 24 auf, in welchem die Schiene 12 einliegt. Sie füllt allerdings den offenen Querschnitt 24 des Trägerprofils 14 nicht vollständig aus, sondern zu beiden Seiten der Schiene 12 verbleiben Zwischenräume 32, in denen Klemmprofile 16 einliegen, welche die Schiene 12 seitlich an ihrer Oberseite etwas übergreifen und somit die Schiene 12 sicher in ihrer Lage fixieren. Schrauben, die senkrecht von oben durch die Klemmprofile 16 geführt sind und in Fig. 1 nicht gezeigt sind, verankern die Klemmprofile 16 im Trägerprofil 14. Zwischen den Oberseiten der Klemmprofile 16 verbleibt ein freier oberer Oberflächenbereich der Schiene 12, der als Lauffläche für eine Laufrolle dient.

Die hier und in der übrigen Beschreibung verwendeten Begriffe "oben" und "unten" beziehen sich lediglich auf eine übliche Orientierung eines Bodenschienensystems, so wie es auch in dem vorliegenden Ausführungsbeispiel dargestellt ist. Diese Terminologie soll jedoch keine Beschränkung der Erfindung auf eine solche Orientierung darstellen. Vielmehr ist es möglich, das dargestellte Schienensystem 10 auch in einer um seine Längsachse gedrehten Stellung zu benutzen. Lediglich der Einfachheit halber ist daher im vorliegenden Fall die offene Seite des Trägerprofils 14 als Oberseite definiert.

Das Schienensystem 10 ist spiegelsymmetrisch bezüglich einer senkrechten Ebene, d.h. zu beiden Seiten der Schiene 12 sind identische Klemmprofile 16 angeordnet. Der nach oben offene Querschnitt 24 des Trägerprofils 14 weist auf seinem Grund 26 eine zentrale kreisbogenförmige Ausnehmung 28 auf, in der die Schiene 12 mit ihrer Unterseite einliegt.

Ein oberer Teil 34 des offenen Querschnitts 24 ist von dessen unterem Teil 36 durch eine Abstufung 38 in den Seitenwänden 30 getrennt. Der obere Teil 34 ist von oben betrachtet hinterschnitten, d.h. er verbreitert sich von der Oberseite des Trägerprofils 14 her nach unten. Der obere Teil 34 soll daher im folgenden als hinterschnittener Querschnittsbereich 34 des offenen Querschnitts 24 bezeichnet werden. Er wird seitlich durch gegenüberliegende obere Seitenwandabschnitte 40 oberhalb der Abstufung 38 begrenzt, deren Innenseiten konkav gewölbt sind. Unterhalb der Abstufung 38 verlaufen die Seitenwände 30 an ihren Innenflächen senkrecht.

Der obere Teil 42 des Zwischenraums 32, der einen Teilbereich des hinterschnittenen Querschnittsbereichs 34 oberhalb der Abstufung 38 bildet und zwischen dem konkav gewölbten oberen Seitenwandabschnitt 40 und der Schiene 12 liegt, verjüngt sich nach unten hin. Diese Verjüngung oder Verengung ist dadurch bedingt, dass der Zwischenraum 32 innen durch die äußere Zylinderfläche der Schiene 12 begrenzt wird. Diese weist einen kleineren Krümmungsradius auf als die Wölbung des Seitenwandabschnitts 40, und ihr Krümmungsmittelpunkt liegt tiefer. Daher nimmt die Breite des Querschnitts der Schiene 12 im hinterschnittenen Querschnittsbereich 34 von oben nach unten stark zu. So wird erreicht, dass der Zwischenraum 32 auf der Höhe der Abstufung 38 seine kleinste Breite erreicht, obwohl der hinterschnittene Querschnittsbereich 34 selbst oberhalb der Abstufung 38 seine größte Breite aufweist.

Nach innen wird der obere Teil 42 des Zwischenraums 32 durch eine obere Lagerfläche 44 der Schiene 12 begrenzt. An dieser oberen Lagerfläche 44 liegt eine innere obere Kontaktfläche 46 des Klemmprofils 16 bündig an, die die gleiche Wölbung aufweist, wie die obere Lagerfläche 44 der Schiene 12. Hingegen weist das Klemmprofil 16 im oberen Bereich seiner Außenseite eine äußere Kontaktfläche 48 auf, deren Form der Wölbung des oberen Seitenwandabschnittes 40 entspricht und welche sich daran anschmiegt.

Die innere Kontaktfläche 46 und die äußere Kontaktfläche 48 begrenzen einen oberen Teil 50 des Klemmprofils 16, der sich entsprechend der Form des oberen Teils 42 des Zwischenraums 32 nach unten hin verjüngt und keilförmig in diesen Teil 42 eingepasst ist. An seinem verbleibenden unteren Teil 52 weist das Klemmprofil 16 eine untere innere Kontaktfläche 54 auf, die seitlich am unteren Teil der Schiene 12 anliegt und deren Form der Wölbung des Außenmantels der Schiene 12 entspricht. Insgesamt liegt das Klemmprofil 16 also mit drei Kontaktflächen an der Schiene 12 und an der Seitenwand 30 des Trägerprofils 14 an, nämlich mit einer oberen inneren Kontaktfläche 46 und einer unteren inneren Kontaktfläche 54 an der Schiene 12, und mit einer oberen äußeren Kontaktfläche 48 an der gewölbten Seitenwand 40.

Wie im folgenden näher erläutert werden soll, bedingt diese Form des Zwischenraums 32 und des Klemmprofils 16 eine leichte Montage, andererseits jedoch eine Klemmwirkung, die ein Herausheben der Schiene 12 ohne vorherige Demontage der seitlichen Klemmprofile 16 verhindert.

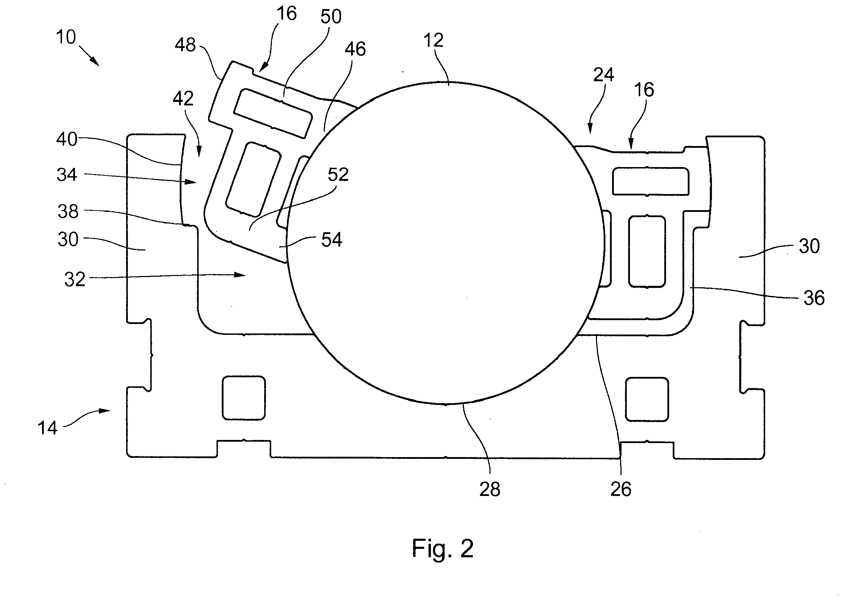

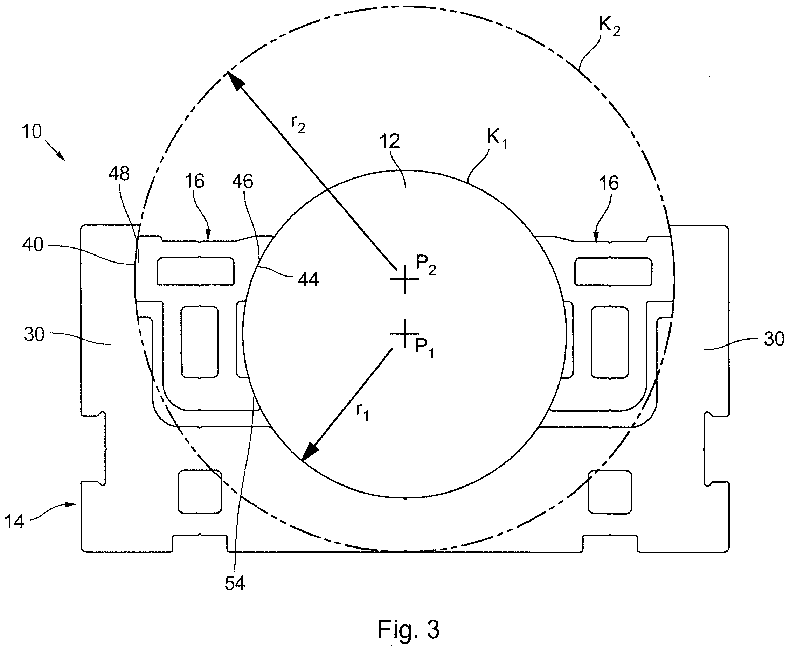

Fig. 2 demonstriert, wie das Klemmprofil 16 in den Zwischenraum 32 eingesetzt wird. Das rechte Klemmprofil 16 in Fig. 2 ist bereits eingesetzt, während das linke Klemmprofil 16 auf dem Außenmantel der Schiene 12 deren Wölbung folgend nach unten in den Zwischenraum 32 gleitet. Während dieser Bewegung haben beide innere Kontaktflächen 46 und 54 des Klemmprofils 16 Kontakt mit der Schiene 12. Zum Abschluss dieser bogenförmigen Bewegung nach unten berührt die äußere Kontaktfläche 48 den oberen Seitenwandabschnitt 40 und schließt mit diesem ab, so dass auch das linke Klemmprofil 16 seine endgültige Montageposition erreicht. Diese ist in Fig. 3 dargestellt.

In dieser Montageposition würde ein Anheben der Schiene 12 in senkrechter Richtung nach oben zu einem Verklemmen der Klemmprofile 16 im hinterschnittenen Querschnittsbereich 34 führen. Dies wird zum einen durch den bündigen Abschluss der oberen Kontaktflächen 46 und 48 zu beiden Seiten des keilförmigen oberen Teils 50 des Klemmprofils 16 mit ihren jeweiligen Anlageflächen begünstigt, zusätzlich jedoch durch den seitlichen Anschlag der inneren Kontaktfläche 54 an der Schiene 12. Dieser verhindert ein Verdrehen des Klemmprofils 16 beim Anheben der Schiene 12.

Die beiden Kreise K₁, K₂ in Fig. 3 sollen die Konturen der Kontaktflächen 46, 48, 54 des Klemmprofils 16 verdeutlichen. Der innere Kreis K₁ beschreibt die Außenkontur des Querschnitts der Schiene 12. Die inneren Kontaktflächen 46 und 54 liegen im Querschnitt auf Kreisbogenabschnitten dieses Kreises K₁. Hingegen folgt der Querschnitt der äußeren Kontaktfläche 46 dem Bogen eines Kreises K₂ mit größerem Radius r₂ als der Radius r₁ des Kreises K₁. Der Mittelpunkt P₂ dieses äußeren Kreises K₂ liegt oberhalb des Mittelpunkts P₁ des inneren Kreises K₁. Die Kreise K₁ und K₂ sind somit exzentrisch mit versetzten Mittelpunkten P₁, P₂ angeordnet. Die unterschiedlichen Krümmungsradien r₁, r₂ der oberen inneren Kontaktfläche 46 und der äußeren Kontaktfläche 48 bedingen hier die sich nach unten verjüngende Querschnittsform des oberen Teils 50 des Klemmprofils 16.

Die Ausbildung der Kontaktflächen 46, 48, 54 als Kreisbogenabschnitte ermöglicht nicht nur ein leichtes Einsetzen, sondern auch eine gute Krafteinleitung in die Seitenwände 30 des Trägerprofils 14 beim Wirken einer Kraft zum Anheben der Schiene 12.

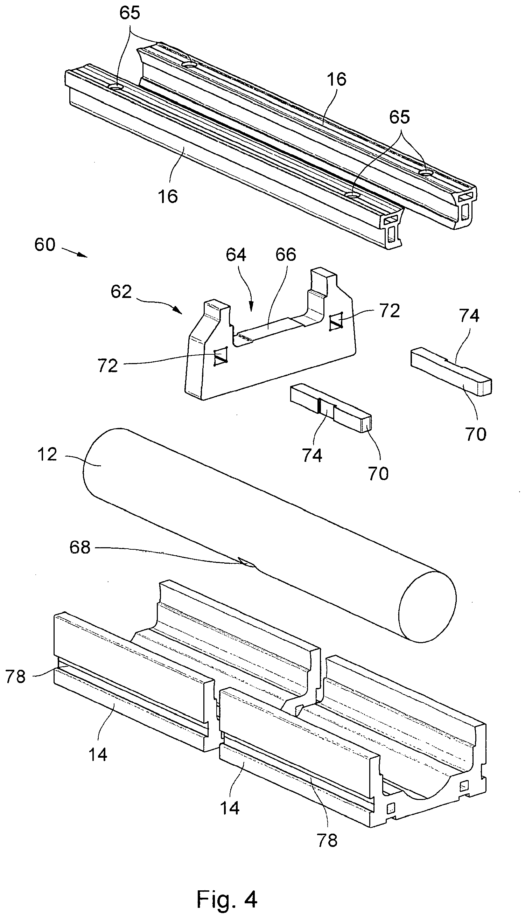

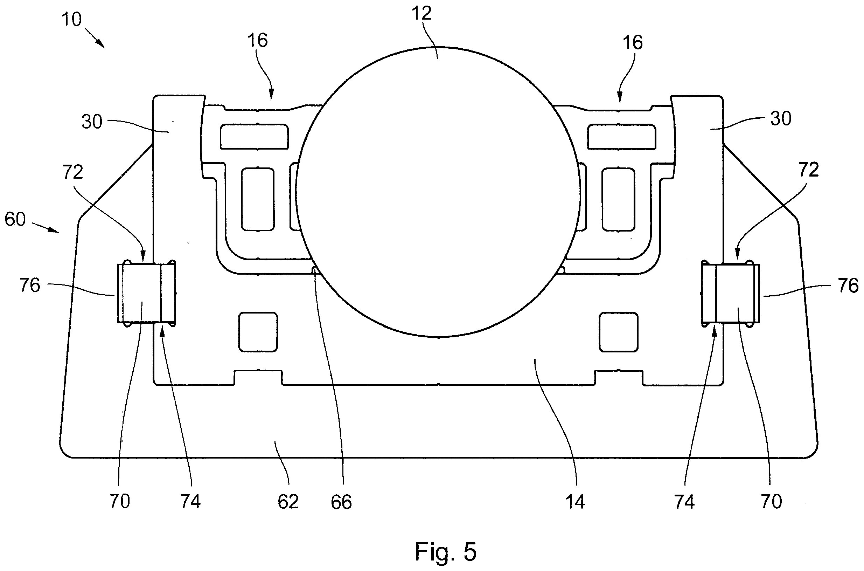

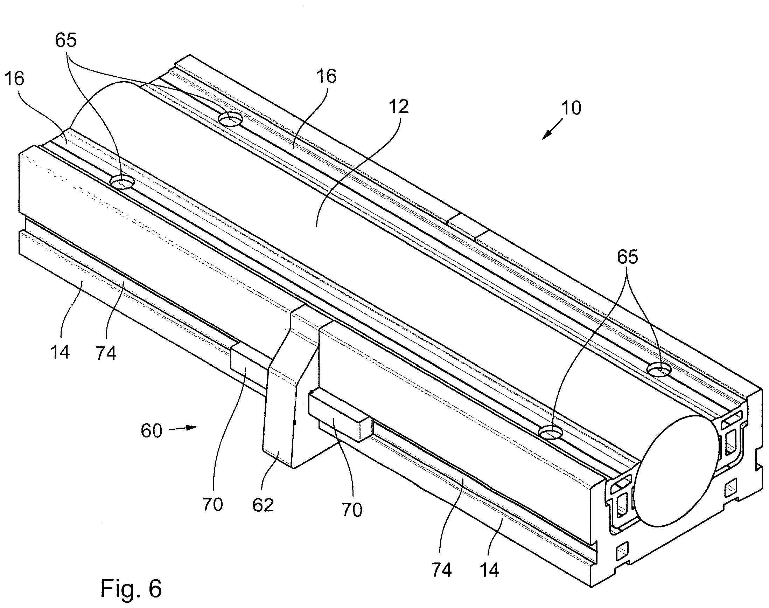

Die Explosionsdarstellung in Fig. 4 zeigt eine Schubsicherung 60 zur Verbindung zweier aneinander anschließender Trägerprofile 14. Diese Schubsicherung 60 ist Bestandteil einer bevorzugten Ausführungsform des erfindungsgemäßen Schienensystems 10. Es umfasst eine Stoßplatte 62 aus gelasertem Stahlblech, die senkrecht stehend zwischen den Enden der zu verbindenden Trägerprofile 14 einliegt. Auf ihrer in der Montageposition oben liegenden Seite ist eine Aussparung 64 in der Stoßplatte 62 vorhanden, deren Abmessungen im wesentlichen dem offenen Querschnitt 24 des Trägerprofils 14 entsprechen. Liegt die Stoßplatte 62 senkrecht zwischen den Enden der Trägerprofile 14 in Fig. 6 ein, bleibt somit der Querschnitt der Trägerprofile 14 auch über die Stoßplatte 62 hinweg offen, und die Schiene 12 kann in den offenen Querschnitt 24 eingelegt werden. Diese montierte Position ist in dem Querschnitt in Fig. 5 dargestellt.

Innerhalb der Aussparung 64 springt eine gerade horizontale Oberkante der Stoßplatte 62 von unten in den Teil des offenen Querschnitts 24 des Trägerprofils 14 vor, der die ausgerundete Mulde 28 zur Aufnahme des Querschnitts der Rundschiene 12 bildet. Die Schiene 12 weist hingegen auf ihrer Unterseite einen quer zur Erstreckungsrichtung der Schiene 12 verlaufenden Schlitz 68 auf, der zur Aufnahme der Oberkante 66 der Stoßplatte 62 dient. Im aufgenommenen Zustand in Fig. 5 kann die Schiene 12 daher nicht in Längsrichtung verschoben werden. Der formschlüssige Eingriff der Oberkante 66 in die schlitzförmige Ausnehmung 68 an der Unterseite der Schiene 12 dient somit als Verschiebesicherung.

Zur sicheren Verbindung der Stoßplatte 62 mit den daran angeschlossenen Trägerprofilen 14 dienen Passfedern 70 zu beiden Seiten der Trägerprofile 14. Diese Passfedern 70 haben einen rechteckigen Querschnitt und erstrecken sich in Längsrichtung der Schiene 12 bzw. der Trägerprofile 14. Sie sind in Öffnungen 72 eingesetzt, die zu beiden Seiten der Aussparung 64 in der Stoßplatte 62 vorhanden sind. In der Mitte ihrer Länge weisen die Passfedern 70 seitliche äußere Ausnehmungen 74 auf (Fig. 4), die dazu vorgesehen sind, die äußeren senkrechten Öffnungsränder 76 der Öffnungen 72 aufzunehmen (Fig. 5). D.h., die Länge der Ausnehmungen 74 in Längsrichtung der Passfedern 70 entspricht der Dicke der Stoßplatte 62. Wird die jeweilige Passfeder 70 in die Öffnung 72 eingeschoben, kann sie auf halber Länge seitlich gegen den Öffnungsrand 76 gedrückt werden, so dass dieser in der Ausnehmung 74 einliegt und die Passfeder 70 verschiebesicher in der Öffnung 72 gehalten wird.

In dieser verschiebesicheren Position werden die beiden Passfedern 70 gehalten, indem die Trägerprofile 14 von beiden Seiten der Stoßplatte 62 her gegen diese geschoben werden und die Passfedern 70 an ihren Innenseiten in Nuten 78 aufgenommen werden, die sich über die senkrechten Außenseiten der Trägerprofile 14 in deren Längsrichtung erstrecken. In der Montageposition in Fig. 5 liegen die Passfedern 70 dann seitlich in den Trägerprofilen 14 ein, und die Passfedern 70 können nicht mehr nach innen in Richtung der Schiene 12 gedrückt werden. Durch das Einsetzen der Klemmprofile 16 und das Verschrauben derselben wird die gesamte Anordnung des Schienensystems 10 vervollständigt.

Das vollständige Schienensystem 10 einschließlich der Schubsicherung 60 ist in Fig. 6 dargestellt. Deutlich ist die Lage der seitlichen Passfeder 70 erkennbar, die in den seitlichen Nuten 78 in den Trägerprofilen 14 einliegen und sich durch die Öffnung 72 in der Stoßplatte 62 erstrecken. Die Stoßplatte 62 kragt seitlich und nach unten gegenüber den Trägerprofilen 14 aus, so dass nach der Festlegung des Schienensystems 10 im Untergrund keine Möglichkeit mehr besteht, das Schienensystem 10 insgesamt in Längsrichtung zu verschieben. Fig. 6 zeigt ferner die Schraublöcher 65 in den Oberseiten der Klemmprofile 16 zur Aufnahme von Befestigungsschrauben.

## Patentansprüche

1. Schienensystem (10), mit einem Trägerprofil (14), das einen nach oben offenen Querschnitt (24) aufweist, einer Schiene (12), die in dem offenen Querschnitt (24) des Trägerprofils (14) derart einliegt, dass zumindest zwischen einer Seite der Schiene (12) und einer den offenen Querschnitt (24) begrenzenden Seitenwand (30) des Trägerprofils (14) ein Zwischenraum (32) verbleibt, und mindestens einem Klemmprofil (16), das in dem Zwischenraum (32) einliegt, mit einer inneren Kontaktfläche (46) seitlich an einer Lagerfläche (44) der Schiene (12) anliegt und die Schiene (12) teilweise übergreift,
**dadurch gekennzeichnet, dass** sich zumindest ein oberer Teil des offenen Querschnitts (24) des Trägerprofils (14) nach unten zu einem hinterschnittenen Querschnittsbereich (34) seitlich erweitert, der durch zwei gegenüberliegende obere Seitenwandabschnitte (40) begrenzt wird, die nach innen geneigt oder konkav gewölbt sind,
und dass sich zumindest ein Teil (50) des Querschnitts des Klemmprofils (16) nach unten hin keilförmig verjüngt und zur Schiene (12) hin durch die innere Kontaktfläche (46) und zur Seitenwand (30) hin durch eine äußere Kontaktfläche (48) begrenzt wird, die an dem entsprechenden oberen Seitenwandabschnitt (40) anliegt, welcher Teil (50) in einen entsprechend geformten Teil (42) des Zwischenraums (32) innerhalb des hinterschnittenen Querschnittsbereichs (34) des Trägerprofils (14) eingepasst ist,
und dass die Schiene (12) als Rundschiene mit kreisrundem Querschnitt ausgebildet ist.

2. Schienensystem gemäß Anspruch 1, **dadurch gekennzeichnet, dass** der sich keilförmig verjüngende Teil (50) einen oberen Querschnittsteil des Klemmprofils (16) bildet, und dass das Klemmprofil (16) ferner einen unteren Teil (52) umfasst, der eine untere innere Kontaktfläche (54) aufweist, die auf einer Höhe unterhalb der inneren Kontaktfläche (46) des oberen Teils (50) seitlich an der Schiene (12) anliegt.

3. Schienensystem gemäß Anspruch 1 oder 2, **dadurch gekennzeichnet, dass** sowohl die obere innere Kontaktfläche (46) als auch die äußere Kontaktfläche (48) des sich keilförmig verjüngenden Teils (50) des Klemmprofils (16) im Querschnitt bogenförmig gekrümmt sind.

4. Schienensystem gemäß Anspruch 3, **dadurch gekennzeichnet, dass** die obere innere Kontaktfläche (46) und die äußere Kontaktfläche (48) des sich keilförmig verjüngenden Teils (50) des Klemmprofils (16) kreisbogenförmig gekrümmt sind.

5. Schienensystem gemäß Anspruch 3 oder 4, **dadurch gekennzeichnet, dass** die obere innere Kontaktfläche (46) und die äußere Kontaktfläche (48) des sich keilförmig verjüngenden Teils (50) des Klemmprofils (16) unterschiedliche Krümmungsradien aufweisen.

6. Schienensystem gemäß Anspruch 5, **dadurch gekennzeichnet, dass** der Krümmungsradius (r2) der äußeren Köntaktfläche (48) größer ist als der Krümmungsradius (r1) der oberen inneren Kontaktfläche (46).

7. Schienensystem gemäß einem der vorhergehenden Ansprüche, **dadurch gekennzeichnet, dass** der Querschnitt der äußeren Kontaktfläche (48) etwa dem Bogen eines Kreises (K2) folgt, dessen Mittelpunkt (P2) auf einer Höhe oberhalb des Mittelpunkts (P1) des Querschnitts der Rundschiene (12) liegt.

8. Schienensystem gemäß einem der Ansprüche 2 bis 7, **dadurch gekennzeichnet, dass** die untere innere Kontaktfläche (54) des unteren Teils (52) des Klemmprofils die Rundschiene (12) seitlich untergreift.

9. Schienensystem gemäß einem der vorhergehenden Ansprüche, **dadurch gekennzeichnet, dass** das Klemmprofil (16) durch Schrauben oder Nieten im Trägerprofil (14) verankert ist, die sich von oben durch das Klemmprofil (16) hindurch in das Trägerprofil (14) erstrecken.

10. Schienensystem gemäß einem der vorhergehenden Ansprüche, **dadurch gekennzeichnet, dass** die Schiene (12) mittig in einem spiegelsymmetrischen Trägerprofil (14) einliegt und zwischen zwei identisch ausgebildeten Klemmprofilen (16) festgelegt ist, die in Zwischenräumen (32) zu beiden Seiten der Schiene (12) einhegen.

11. Schienensystem gemäß einem der vorhergehenden Ansprüche, **gekennzeichnet durch** eine Schubsicherung (60) als Verbindung zweier aneinander anschließender Trägerprofile (14), umfassend eine Stoßplatte (62), die senkrecht stehend zwischen den Enden der zu verbindenden Trägerprofile (14) einliegt und auf ihrer Oberseite eine Aussparung (64) aufweist, die im wesentlichen dem offenen Querschnitt (24) des Trägerprofils (14) entspricht, Passfedern (70), die in der Erstreckungsrichtung der Schiene (12) in Öffnungen (72) in der Stoßplatte (62) zu beiden Seiten der Aussparung (64) eingesetzt sind und seitliche äußere Aussparungen (74) aufweisen, in welche die äußeren Öffnungsränder (76) der Öffnungen (72) eingepasst sind, so dass die Passfedern (70) verliersicher in den Öffnungen (72) einliegen, und seitliche Nuten (74) in den Trägerprofilen (14), die in der Erstreckungsrichtung der Schiene (12) verlaufen, wobei die Trägerprofile (14) beidseitig derart zwischen die Passfedern (70) gegen die Stoßplatte (62) eingeschoben sind, dass die Innenseiten der Passfedern (70) in den Nuten (74) aufgenommen sind.

12. Schienensystem gemäß Anspruch 11, **dadurch gekennzeichnet, dass** die Schiene (12) auf ihrer Unterseite eine quer verlaufende schlitzförmige Ausnehmung (68) zur Aufnahme der Oberkante (66) der Stoßplatte (62) innerhalb der Aussparung (64) aufweist.

13. Schienensystem gemäß Anspruch 11 oder 12, **dadurch gekennzeichnet, dass** die seitlichen und unteren Ränder der Stoßplatte (62) über das Trägerprofil (14) auskragen.

## Claims

1. Track system (10) with a support profile (14) having an upwardly open cross-section (24), a track (12) which sits inside the open cross-section (24) of support profile (14) in such a way that a gap (32) remains at least between one side of track (12) and one side wall (30) of the support profile (14) limiting open cross-section (24), and at least one clamping profile (16) which sits inside gap (32), abuts laterally against a supporting surface (44) of track (12) with an inner contact surface (46) and partially grips over track (12),
**characterised in that** at least an upper part of the open cross-section (24) of support profile (14) widens to the side and downward into an undercut cross-section area (34) which is limited by two opposite top side wall sections (40) which are inwardly inclined or curved concavely,
and **in that** at least part (50) of the cross-section of clamping profile (16) forms a wedge shape which tapers downward and is limited with respect to track (12) by inner contact surface (46) and with respect to side wall (30) by an outer contact surface (48) which abuts against the corresponding top sidewall section (40), said part (50) sitting inside a correspondingly formed part (42) of gap (32) inside the undercut cross-section area (34) of support profile (14), and
**in that** track (12) is formed as a round track with a circular cross-section.

2. Track system of claim 1, **characterised in that** the wedge shaped tapering part (50) forms an upper cross-section part of clamping profile (16), and **in that** clamping profile (16) further comprises a bottom part (52) which has a bottom inner contact surface (54) which abuts laterally against track (12) at a height below the inner contact surface (46) of upper part (50).

3. Track system of claim 1 or 2, **characterised in that** both the top inner contact surface (46) and the outer contact surface (48) of wedge shaped tapering part (50) of clamping profile (16) have curved cross-sections.

4. Track system of claim 3, **characterised in that** the top inner contact surface (46) and the outer contact surface (48) of the wedge shaped tapering part (50) of clamping profile (16) are arc-shaped.

5. Track system of claim 3 or 4, **characterised in that** the top inner contact surface (46) and the outer contact surface (48) of the wedge-shaped tapering part (50) of clamping profile (16) have different radii of curvature.

6. Track system according to claim 5, **characterised in that** the radius of curvature (r₂) of the outer contact surface (48) is greater than the radius of curvature (r₁) of the top inner contact surface (46).

7. Track system according to one of the preceding claims, **characterised in that** the cross-section of the outer contact surface (48) approximately follows the curve of a circle (K₂) whose centre point (P₂) lies at a height above the centre point (P₁) of the cross-section of round track (12).

8. Track system according to one of claims 2 to 7, **characterised in that** the bottom inner contact surface (54) of the lower part (52) of the clamping profile grips under round track (12) at the side.

9. Track system according to one of the preceding claims, **characterised in that** the clamping profile (16) is anchored in support profile (14) by means of screws or rivets extending from the top through the clamping profile (16) into support profile (14).

10. Track system according to one of the preceding claims, **characterised in that** track (12) sits centrally in a mirror-symmetrical support profile (14) and is held between two identically formed clamping profiles (16) which sit inside gaps (32) on both sides of track (12).

11. Track system according to one of the preceding claims, **characterised by** a restraint (60) as a connection between two adjoining support profiles (14), comprising a push plate (62) inserted vertically between the ends of support profiles (14) to be connected, having on its upper side a recess (64) which essentially matches the open cross-section (24) of support profile (14), parallel keys (70) which are inserted in the direction in which track (12) extends into openings (72) in push plate (62) on both sides of recess (64) and have lateral outer recesses (74) into which the outer opening edges (76) of openings (72) are inserted so that parallel keys (70) sit securely in openings (72), and lateral grooves (74) in support profiles (14) running in the direction in which track (12) extends, with support profiles (14) being pushed in on both sides between parallel keys (70) and against push plate (62) in such a way that the inner sides of parallel keys (70) are accommodated in grooves (74).

12. Track system according to claim 11, **characterised in that** track (12) has, on its underside, a crosswise slot-shaped recess (68) to accommodate the top edge (66) of push plate (62) inside recess (64).

13. Track system according to claim 11 or 12, **characterised in that** the lateral and bottom edges of push plate (62) project beyond support profile (14).

## Revendications

1. Système de rail (10), comportant un profilé de support (14) ayant une section transversale (24) ouverte vers le haut, un rail (12) qui est inséré dans la section transversale ouverte (24) du profilé de support (14) de sorte qu'il reste un espace (32) au moins entre un côté du rail (12) et une paroi latérale (30) du profilé de support (14) délimitant la section transversale ouverte (24), et au moins un profilé de serrage (16) qui est inséré dans l'espace (32), qui est latéralement en contact avec une surface d'appui (44) du rail (12) par une surface de contact intérieure (46) et qui chevauche partiellement le rail (12),
**caractérisé en ce qu'**au moins une partie supérieure de la section transversale ouverte (24) du profilé de support (14) s'élargit latéralement vers le bas jusqu'à une zone de section transversale de contre-dépouille (34) qui est délimitée par deux parties de parois latérales supérieures opposées (40) qui sont inclinées vers l'intérieur ou incurvées de manière concave,
et **en ce qu'**au moins une partie (50) de la section transversale du profilé de serrage (16) se rétrécit vers le bas en forme de coin et est délimitée vers le rail (12) par la surface de contact intérieure (46) et vers la paroi latérale (30) par une surface de contact extérieure (48) qui est en contact avec la partie de paroi latérale supérieure (40) correspondante, laquelle partie (50) est emboîtée dans une partie (42) de l'espace (32) formée de manière correspondante à l'intérieur de la zone de section transversale de contre-dépouille (34) du profilé de support (14),
et **en ce que** le rail (12) est configuré comme un rail rond ayant une section transversale circulaire.

2. Système de rail selon la revendication 1, **caractérisé en ce que** la partie (50) se rétrécissant en forme de coin forme une partie de section transversale supérieure du profilé de serrage (16), et **en ce que** le profilé de serrage (16) inclut en outre une partie inférieure (52) qui comporte une surface de contact intérieure inférieure (54) qui est latéralement en contact avec le rail (12) à un niveau sous la surface de contact intérieure (46) de la partie supérieure (50).

3. Système de rail selon la revendication 1 ou 2, **caractérisé en ce que** la surface de contact intérieure supérieure (46) ainsi que la surface de contact extérieure (48) de la partie se rétrécissant en forme de coin (50) du profilé de serrage (16) sont incurvées en forme d'arc en coupe transversale.

4. Système de rail selon la revendication 3, **caractérisé en ce que** la surface de contact intérieure supérieure (46) et la surface de contact extérieure (48) de la partie se rétrécissant en forme de coin (50) du profilé de serrage (16) sont incurvées en forme d'arc de cercle.

5. Système de rail selon la revendication 3 ou 4, **caractérisé en ce que** la surface de contact intérieure supérieure (46) et la surface de contact extérieure (48) de la partie se rétrécissant en forme de coin (50) du profilé de serrage (16) ont différents rayons de courbure.

6. Système de rail selon la revendication 5, **caractérisé en ce que** le rayon de courbure (r2) de la surface de contact extérieure (48) est supérieur au rayon de courbure (r1) de la surface de contact intérieure supérieure (46).

7. Système de rail selon l'une des revendications précédentes, **caractérisé en ce que** la section transversale de la surface de contact extérieure (48) suit approximativement l'arc d'un cercle (K2) dont le centre (P2) se situe à un niveau au-dessus du centre (P1) de la section transversale du rail rond (12).

8. Système de rail selon l'une des revendications 2 à 7, **caractérisé en ce que** la surface de contact intérieure inférieure (54) de la partie inférieure (52) du profilé de serrage vient latéralement en prise par le dessous avec le rail rond (12).

9. Système de rail selon l'une des revendications précédentes, **caractérisé en ce que** le profilé de serrage (16) est ancré dans le profilé de support (14) par des vis ou des rivets qui s'étendent dans le profilé de support (14) à partir du haut à travers le profilé de serrage (16).

10. Système de rail selon l'une des revendications précédentes, **caractérisé en ce que** le rail (12) est inséré au centre dans un profilé de support (14) symétrique et est fixé entre deux profilés de serrage (16) formés à l'identique qui sont insérés dans des espaces (32) des deux côtés du rail (12).

11. Système de rail selon l'une des revendications précédentes, **caractérisé par** une protection contre le cisaillement (60) servant de liaison de deux profilés de support (14) adjacents l'un à l'autre, incluant une plaque de poussée (62) qui est insérée perpendiculairement entre les extrémités des profilés de support (14) à relier et qui comporte un évidement (64) sur son côté supérieur qui correspond sensiblement à la section transversale ouverte (24) du profilé de support (14), des clavettes parallèles (70) qui sont insérées dans la direction d'extension du rail (12) dans des ouvertures (72) de la plaque de poussée (62) des deux côtés de l'évidement (64) et qui comportent des évidements extérieurs latéraux (74), dans lesquels les bords d'ouverture extérieurs (76) des ouvertures (72) sont insérés de telle sorte que les clavettes parallèles (70) sont inamovibles dans les ouvertures (72), et des rainures latérales (74) dans les profilés de support (14) qui s'étendent dans la direction d'extension du rail (12), dans lequel les profilés de support (14) sont insérés des deux côtés entre les clavettes parallèles (70) contre la plaque de poussée (62) de telle sorte que les côtés intérieurs des clavettes parallèles (70) sont reçus dans les rainures (74).

12. Système de rail selon la revendication 11, **caractérisé en ce que** le rail (12) comporte, sur son côté inférieur, un évidement (68) en forme de fente s'étendant transversalement pour recevoir le bord supérieur (66) de la plaque de poussée (62) à l'intérieur de l'évidement (64) .

13. Système de rail selon la revendication 11 ou 12, **caractérisé en ce que** les bords latéraux et inférieurs de la plaque de poussée (62) font saillie au-dessus du profilé de support (14).
